# EUROPÄISCHE PATENTSCHRIFT

(11) **EP 3 355 679 B1**
(45) Veröffentlichungstag und Bekanntmachung des Hinweises auf die Patenterteilung: **14.10.2020**
(21) Anmeldenummer: 16777902.4
(22) Anmeldetag: 23.09.2016
(51) Int. Cl.: A01D 41/14, A01D 45/02

(54) **VORRICHTUNG ZUR ERNTE VON STÄNGELIGEM HALMGUT**
HARVESTING DEVICE FOR STANDING CROP
DISPOSITIF DE RÉCOLTE

(30) Priorität: 28.09.2015 DE 102015116370
(43) Veröffentlichungstag der Anmeldung: 08.08.2018
(73) Patentinhaber: Carl Geringhoff GmbH & Co. KG, 59227 Ahlen (DE)
(72) Erfinder: TIESSEN, Reimer, 26135 Oldenburg (DE); HEMMESMANN, André, 48336 Sassenberg (DE); BEUMKER, Martin, 59329 Wadersloh (DE); GERSMANN, Thomas, 48231 Warendorf (DE); SCHARMANN, David, 59269 Beckum (DE)
(74) Vertreter: Weeg, Thomas
(86) Internationale Anmeldenummer: PCT/EP2016/001593
(87) Internationale Veröffentlichungsnummer: WO 2017/054913

(56) Entgegenhaltungen:
- EP-A1- 2 335 472
- WO-A1-2013/089074
- CA-A1- 2 226 200
- US-A- 1 964 579
- US-A- 5 878 560
- US-A- 5 881 542

## Beschreibung

Die vorliegende Erfindung bezieht sich auf eine Vorrichtung nach dem Oberbegriff des Anspruchs 1.

Die hier interessierenden Vorrichtungen zur Ernte von stängeligem Halmgut werden zumeist als Maispflückvorsätze an Mähdrescher angebaut, um damit Körnermais zu ernten. In den Maispflückvorsätzen werden die Maiskolben von den Stängeln getrennt, die Stängel und Blätter werden auf den Boden abgeworfen und die gepflückten Maiskolben werden in den Mähdrescher abgefördert, um sie dort auszudreschen. Der Pflückvorgang erfolgt, indem der Pflanzenstängel mit zumindest einem Pflückrotor nach unten gezogen wird, nachdem der Pflanzenstängel in den von zumindest einer seitlich angeordneten Pflückplatte begrenzten Pflückspalt eingelaufen ist. Wenn ein an dem Maisstängel hängender Maiskolben den Pflückspalt erreicht, bleibt er an der oder den Pflückplatten hängen, während der Stängel weiter nach unten gerissen wird, weil er breiter als der Pflückspalt ist. Dadurch reißt der Maiskolben vom Stängel ab. Die mit den Umlaufförderern, wie beispielsweise Kettenförderern oder Riemenförderern, endlos umlaufenden Mitnehmer erfassen sodann die abgetrennten Maiskolben und fördern diese in den Bereich der Querförderschnecke, die die abgetrennten Maiskolben mittig der Vorrichtung zusammenführt und nach hinten an den Mähdrescher abgibt. Üblicherweise werden in einer Pflückeinheit zwei Umlaufförderer, die beispielsweise Förderketten oder Riemen aufweisen, verwendet, die in einer Ebene oberhalb der Pflückplatten und zu beiden Seiten des Pflückspalts angeordnet sind. Die Drehachsen der Umlenkräder stehen parallel zueinander. Wenn nachfolgend Ketten und Riemen als Förderelemente eines Umlaufförderers genannt werden, so sind damit stellvertretend alle technischen Mittel gemeint, die umlaufend Mitnehmer an den Pflückspalten entlang bewegen können.

Die Umlaufförderer laufen jeweils an zumindest einem vorderen und einem hinteren Umlenkrad um. Die Umlaufförderer haben nicht nur die Aufgabe, die Maisstängel im Bereich der Pflückspalte abzufördern, sie dienen im Bereich des vorderen Umlenkrades auch dem Zweck, auf dem Feld liegende Maisstängel zu erfassen, anzuheben und einen Einlauf dieser liegenden Maisstängel in den Pflückspalt zu ermöglichen. Dazu sollte der Umlaufförderer im vorderen Bereich möglichst tief auf den Boden herunter reichen. Die Lage des tiefsten Punktes des Umlaufförderers wird durch die räumliche Anordnung des vorderen Umlenkrades bestimmt, da der Umlaufförderer bei einem Umlauf um das Umlenkrad wegen der Kreisform des Umlenkrades nur an einer Stelle seinen tiefsten Punkt erreicht. Der Durchmesser des Umlenkrades bestimmt den Abstand des tiefsten Punktes zur Pflückspaltmitte.

Die aus dem Stand der Technik bekannten Vorrichtungen sind für Reihenweiten des stängeligen Halmguts von 30 Zoll ausgelegt und funktionieren mit flach liegenden Umlenkrädern zufrieden stellend. Die Umlaufförderer selbst sind zwar nach hinten zum Feldboden ansteigend angeordnet, um darunter die Pflückrotoren positionieren zu können. Die Umlenkräder sind mit ihrer Drehachse aber nicht in Querrichtung zum Pflückspalt winklig angestellt. Bei dieser Anordnung bildet der vorderste Punkt des Umlenkrades die tiefste Position des Umlaufförderers.

Im Getreidebau kommen nun Stimmen auf, die halbierte Reihenweiten von 15 Zoll für den Anbau von stängeligem Halmgut befürworten. Für solche Reihenweiten ist die herkömmliche Erntetechnik jedoch nicht brauchbar. Die Umlenkräder können nicht einfach auf die halbe Baubreite reduziert werden, weil die Ketten oder Riemen eines Umlaufförderers auf bestimmte Mindestradien angewiesen sind. Es kann auch nicht auf einen Umlaufförderer pro Pflückspalt verzichtet werden, ohne dass sich daraus keine Nachteile für die Abförderung der gepflückten Maiskolben ergeben würden. Bei nur einem Umlaufförderer pro Pflückspalt werden die Maiskolben nur von einer Seite her erfasst und können den Mitnehmern ausweichen.

In den Schriften US 5,884,464 und US 5,924,269 ist für eine Erntevorrichtung vorgeschlagen, die Umlaufförderer abwechselnd höhenmäßig zu staffeln und dabei auf den den Pflückspalten abgewandten Seiten überlappen zu lassen, um Baubreite zu sparen. Hier ergibt sich bei den höher positionierten Umlaufförderern jedoch eine verschlechtere Annahme von Lagermais.

Aus der Schrift US 5,878,560 ist es bekannt, für schmalere Reihenweiten des Ernteguts die Drehachse des vorderen Umlenkrades quer zur Pflückebene des Pflückspaltes schräg zu stellen, so dass sich die Drehachsen überkreuzen, um dadurch den Baubreitenbedarf des Umlaufförderers über die Arbeitsbreite der Vorrichtung gesehen zu reduzieren. Die Mitnehmer verbleiben in der Rotationsebene der Umlenkräder. Die Pflückebene wird durch die Lage der beiden Vorderkanten der Pflückplatten im Bereich des Pflückspaltes bestimmt und liegt annähernd waagerecht, während die Drehachsen der Umlenkräder zur Pflückebene um etwa 45° angestellt sind. Durch die Schrägstellung der Drehachsen erhöht sich aber der vorderste Umlenkpunkt der beiden vorderen Umlenkräder, so dass die Annahme von Lagermais verschlechtert ist. Um eine schmale Baubreite zu erzielen, müssen die Umlaufförderer sehr steil aufgestellt werden. Die Abdeckhauben ragen dann zwischen den Pflückspalten erheblich weiter nach oben auf, weil die Baubreite der Umlaufförderer unverändert geblieben ist. Die hoch aufragenden Abdeckhauben behindern den Gutfluss des Ernteguts.

Aus der Schrift US 5,881,542 ist es bekannt, die beiden Umlenkräder der Umlaufförderer einer Pflückeinheit in dieselbe Richtung zur Pflückebene schräg zu stellen, um dadurch Baubreite zu sparen. Die Mitnehmer der beiden Umlaufförderer sind dafür jeweils in unterschiedliche Richtungen zur Drehachse des jeweiligen Umlaufförderers gekröpft, nämlich einmal nach oben und einmal nach unten hin, um sich oberhalb des Pflückspalts in einer durch sie definierten Förderebene parallel zur Pflückebene zu erstrecken. Wegen der nach unten angewinkelten Mitnehmer eines Umlaufförderers muss die Pflückebene nach oben angehoben werden, damit diese Mitnehmer nicht zu nah am Boden vorlaufen. Für die nach oben angewinkelten Mitnehmer ergibt sich wieder ein zu großer Abstand zum Boden, durch den sich die Annahme von Lagermais verschlechtert.

Aus der Schrift US 1,964,579 ist ein einreihiger Pflücker mit einer einzigen Pflückeinheit bekannt. Um die frontseitige Gutannahme zu verbessern, sind der Pflückereinheit Rechräder vorgeschaltet, die den Einzug der Stängel verbessern sollen. Der Beschreibung lässt sich entnehmen, dass die Rechräder im Zusammenwirken mit angewinkelten Mitnehmern an den Einzugsketten dafür sorgen sollen, dass die Stängel in einer aufrecht stehenden Position in die Pflückrotoren befördert werden.

Weitere Erntevorrichtung sind aus den Schriften EP 2 335 472 A1, WO 2013/089074 und CA 2,226,200 A1 bekannt, wobei hier herkömmliche Erntevorrichtungen offenbart sind, bei denen die Drehachsen der vorderen und hinteren Umlaufräder rechtwinklig zur Pflückebene ausgerichtet sind und die Mitnehmer zur Drehachse nicht nach oben angewinkelt sind.

Es ist die Aufgabe der vorliegenden Erfindung, eine Anordnung für die Umlaufförderer zu finden, bei sich eine verringerte Baubreite ergibt, ohne dass die Annahme von Lagermais und die Abförderung des Ernteguts wesentlich verschlechtert wird.

Die Aufgabe wird für eine gattungsgemäße Vorrichtung durch die kennzeichnenden Merkmale des Anspruchs 1 gelöst.

Die Mitnehmer überstreichen im Umlenkbereich des hinteren Umlenkrades eine Schwelle, die am hinteren Ende des Pflückspaltes den Übergang von den Pflückplatten zur Mulde der Querfördereinrichtung bildet. Durch die gekröpfte Form der Mitnehmer und die schräg gestellten Drehachsen der hinteren Umlenkräder ergibt sich in diesem Bereich eine aufwärts gerichtete Bewegung der Mitnehmer, durch die sich das von ihnen beförderte Erntegut besser von den Mitnehmern ablöst und nach schräg unten in den Wirkbereich der Querförderschnecke als Querfördereinrichtung wegrutscht, während der Mitnehmer sich oben vom Erntegut weg bewegt. Dadurch verringert sich das Risiko von Verstopfungen und Materialansammlungen im Übergangsbereich, in dem die Mitnehmer in den Bereich der Abdeckhaube gelangen, unter der sie wieder nach vorne zurücklaufen.

Durch die in einem Winkel schräg angestellten Drehachsen der Umlenkräder quer zur Arbeitsbreite der Vorrichtung verringert sich bereits der Breitenbedarf der Umlaufförderer über die Baubreite der Vorrichtung. Die Baubreite wird weiter zusätzlich verringert durch die Anstellung der Mitnehmer beider Umlaufförderer nach oben hin. Die Vorrichtung kann für Reihenweiten von 15 Zoll eingesetzt werden. Die als verlängert gedachten Drehachsen müssen tatsächlich natürlich nicht so lang ausgeführt werden, dass sie sich in einem Abstand zur Pflückebene oberhalb der Pflückspalte kreuzen, die Drehachsen müssen nur so lang ausgeführt sein dass sie die Umlenkräder der Umlenkförderer tragen können. Ansonsten würden sie den Materialfluss stören.

Durch die Schrägstellung der Umlenkräder quer zur Arbeitsbreite der Vorrichtung und zur Pflückebene kann aber insbesondere darauf verzichtet werden, die Pflückebene anzuheben und/oder die Umlaufförderer selbst weiter nach oben hin zu positionieren. Dadurch bleibt der vorderste Umlenkpunkt der Umlenkräder der Umlaufförderer weiter sehr bodennah und tief unten. Hinzu kommt, dass die um die vorderen Umlenkräder umlaufenden Mitnehmer eine räumliche Bewegungsbahn durchlaufen, bei der sie sich aus einer höheren Ebene kommend zunächst bis zum vorderen Umlenkpunkt dem Boden nähern, sich dann aber ab dem vorderen Umlenkpunkt wieder nach oben bewegen und dabei wegen der nach oben gekröpften Lage der Mitnehmer bodennah lagerndes Halmgut besser aufnehmen und mitnehmen können.

Wenn in dieser Beschreibung von vorne oder hinten die Rede ist, so ist diese Angabe immer auf die Ausrichtung der Vorrichtung auf den stehenden Bestand des Ernteguts hin gemeint. Dabei ist vorne der Bereich, mit dem die Vorrichtung in den stehenden Bestand gefahren wird, und hinten die Richtung, in die das von der Vorrichtung gesammelte Erntegut an den Mähdrescher abgegeben wird.

Nach einer Ausgestaltung der Erfindung sind die Drehachsen der Umlenkräder der Umlaufförderer quer zur Arbeitsbreite der Vorrichtung und zur Pflückebene, die von den einander zugewandten Vorderkanten der einem Pflückspalt zugeordneten Pflückplatten definiert ist, in einem Winkel α zur Pflückebene und die an den Umlaufförderern angeordneten Mitnehmer in einem Winkel β zur Umlaufebene, die von den Umlenkrädern definiert ist, schräg angestellt, wobei der Winkel β so gewählt ist, dass die Mitnehmer in einer Hüllkurvenbahn umlaufen, in der sie in ihrer Abförderrichtung mit ihrer Unterkante planparallel zur Pflückebene ausgerichtet sind. Durch die Verteilung der Anstellwinkel auf die Schrägstellung der Drehachsen und die Kröpfung der Mitnehmer quer zur Arbeitsbreite der Vorrichtung und zur Pflückebene ergeben sich erntegutfreundliche Übergänge in den Übergangsbereichen zu anderen Maschinenteilen, und der Bauraum wird optimal ausgenutzt. Die Abdeckhauben zwischen den Einzugsspalten ragen nicht zu weit hoch, und es bleibt noch genügend Freiraum zur Annahme des Ernteguts, den Pflückvorgang und den Abtransport der gepflückten Maiskolben. Durch den planparallelen Umlauf der Mitnehmer mit ihrer Unterkante zur Pflückebene wird auf den Pflückplatten liegendes Erntegut sauber und sicher erfasst und nach hinten abgefördert. Selbst kleine Einzelkörner bleiben nicht auf den Pflückplatten liegen und werden abgefördert. Auch Körnerbruch wird vermieden, der sich sonst einstellen könnte, wenn Körner zwischen den Mitnehmern und der Oberfläche der Pflückplatten bei der Abförderung eingequetscht und beschädigt werden.

Nach einer Ausgestaltung der Erfindung betragen die Winkel α und β jeweils etwa oder genau 45°. Eine Schwankung um jeweils 5 ° nach oben oder unten ist dabei unkritisch. Bei diesen Winkelmaßen ergibt sich, dass die Mitnehmer bei ihrem Vorlauf mit ihrer Unterkante während eines Umlaufs in genau oder annähernd einem rechten Winkel zur Unterkante der in Abförderrichtung zurücklaufenden Mitnehmer nach oben gereckt sind. In dieser Rücklaufposition benötigen die Mitnehmer nur ein geringes Breitenmaß, weil sie mit ihrer Förderbreite nach oben weisend ausgerichtet sind, wodurch sich der mögliche Abstand von Pflückreihen in einer Vorrichtung noch weiter verringert.

Nach einer Ausgestaltung der Erfindung sind im vorderen Bereich der Umlaufförderer mehrere Umlenkräder seitlich und in Längsrichtung der Vorrichtung versetzt zueinander angeordnet, wobei bei jedem Umlaufförderer das vorderste Umlenkrad seitlich weiter von der Längsmittelachse des Einzugsspaltes entfernt ist als das weiter hinten liegende Umlenkrad, und die mehreren Umlenkräder der einem Pflückspalt zugeordneten Umlaufförderer begrenzen eine annähernd V-förmige Annahmeöffnung, in der die gegenüberliegenden Umlaufförderer abschnittweise einen linearen Verlauf aufweisen. Bei einer nach hinten ansteigenden Anordnung des Pflückspaltes und der Pflückplatten ergibt sich zwischen den beiden vorderen Umlenkrädern ein Umlaufweg für den Umlaufförderer, bei dem sich dieser vom vordersten Umlenkrad mit den Mitnehmern nicht sofort nach oben bewegt, sondern zunächst eher seitwärts, in einer annähernd oder genau waagerechten Ebene. Durch einen Umlaufförderer, der sich im Einzugsbereich etwa trichterförmig von beiden Seiten des Pflückspalts zunächst annähernd waagerecht in Bodennähe bewegt, ist es möglich, noch förderaktiver Lagermais vom Boden aufzunehmen in den Bereich des Pflückspaltes zu befördern, auch wenn das Erntegut in sehr engen Reihen steht. Trotzdem droht nicht das Risiko, bei normal stehenden Erntegutstängeln durch eine zu aggressive Förderung Schüttelverluste zu verursachen oder stehende Stängel abzuquetschen.

Nach einer Ausgestaltung der Erfindung sind auch die Drehachsen der hinteren Umlenkräder der Umlaufförderer quer zur Arbeitsbreite der Vorrichtung und zur Pflückebene so in einem Winkel schräg angestellt, dass sich die als verlängert gedachten Drehachsen oberhalb in einem Abstand zur Pflückebene kreuzen. Die Ketten oder Riemen der Umlaufförderer werden auf diese Weise nicht oder nur wenig bei einem Umlauf verschränkt.

Nach einer Ausgestaltung der Erfindung sind die Drehachsen der der hinteren Umlenkräder der Umlaufförderer in einem Winkel von genau oder etwa 45° zur Pflückebene schräg angestellt. Auch bei den hinteren Umlenkrädern ergibt sich der Vorteil, dass sich durch die zwangsläufig gleichmäßige Verteilung der Anstellwinkel auf die Schrägstellung der Drehachsen und die Kröpfung der Mitnehmer erntegutfreundliche Übergänge in den Übergangsbereichen zu anderen Maschinenteilen ergeben, und auch der Bauraum im Abförderbereich der Pflückspalte optimal ausgenutzt wird. Die Abdeckhauben zwischen den Einzugsspalten ragen auch im hinteren Bereich des Pflückspaltes nicht zu weit hoch. Auch hier eine Abweichung des Winkelmaßes um 5° nach oben oder unten unkritisch, die Baubreite nimmt dann nur unerheblich zu.

Nach einer Ausgestaltung der Erfindung weist zumindest ein Pflückrotor über seine Länge verteilt mehrere von der Welle des Pflückrotors getragene Schneidscheiben auf, die in radialer Richtung über den zylindrischen Körper dieses Pflückrotors überstehen und bis an oder in den Hüllkreis des benachbarten Pflückrotors heranreichen. Eine in die Pflückrotoren integrierte Schneideinrichtung zum Häckseln der Stängel und Blattreste, wenn diese durch die Pflückrotoren nach unten gezogen werden, spart Bauraum ein, der insbesondere bei sehr schmalen Reihenweiten knapp ist.

Nach einer Ausgestaltung der Erfindung sind Antriebswellen von nebeneinander angeordneten hinteren Umlenkrädern zur Querfördereinrichtung hin von einer Abdeckplatte abgedeckt, die von der Schwelle bis zur Rotationsebene der benachbarten hinteren Umlenkräder aufragt. Die Abdeckplatte kann ein- oder mehrteilig ausgebildet sein. Durch die Abdeckplatte wird verhindert, dass Erntegut von den Antriebswellen und/oder den hinteren Umlenkrädern mitgenommen wird und sich zu einer dickeren Materiallage aufwickeln kann. Dies ist insbesondere von Vorteil, weil die sich im Bereich der hinteren Umlenkräder nach oben bewegenden Mitnehmer im Übergabebereich Erntegut mitnehmen und hochfördern könnten. Auch Material, das von der Querfördereinrichtung seitwärts befördert wird, könnte ohne die Abdeckplatte in den Bereich der Antriebswellen gelangen. Dies wird durch die Abdeckplatte verhindert.

Nach einer Ausgestaltung der Erfindung werden die einem Pflückspalt zugeordneten Umlaufförderer und Pflückrotoren von einem gemeinsamen Reihengetriebe angetrieben, wobei das Reihengetriebe für den Antrieb jedes Umlaufförderers eine erste Zahnradstufe von einer Hauptantriebswelle auf eine Zwischenwelle und eine zweite Zahnradstufe von der Zwischenwelle auf die Welle aufweist, auf der das hintere Umlenkrad des Umlaufförderers drehfest aufgesetzt ist, und wobei die ersten Zahnradstufe als Winkelgetriebe ausgebildet ist, so dass die Zwischenwelle nicht parallel zur Hauptantriebswelle verläuft. Das Reihengetriebe kann modular in einer Vorrichtung verwendet werden. So können je nach Breitenausführung der Vorrichtung mit 6, 8 oder 10 Reihen Erntekapazität entsprechend 6, 8 oder 10 Reihengetriebe nebeneinander am Rahmen befestigt sein. Aus einer Ansicht von hinten hat das Reihengetriebe etwa eine Y-Form mit den beiden schräg nach oben ragenden und seitlich etwas überstehenden Ästen, in denen die Welle zum Antrieb des hinteren Umlenkrades angeordnet ist. Das Reihengetriebe kann auf diese Weise trotz einer zentral durchgehenden Hauptantriebswelle so schmal gebaut werden, dass ein einzelnes Reihengetriebe auch bei Reihenweiten von 15 Zoll alle Abtriebe für die Umlaufförderer und Pflückrotoren beinhaltet. Bei der Verwendung von Schneidscheiben auf zumindest einem Pflückrotor zum Zerhäckseln von Stängeln und Blättern kann auf einen separaten Abtrieb für eine Häckselvorrichtung verzichtet werden, wodurch das Reihengetriebe zusätzlich vereinfacht wird.

Nach einer Ausgestaltung der Erfindung ist zwischen benachbarten Reihengetrieben eine Wellenverbindung zur Fortführung der Hauptantriebswelle angeordnet. Durch die winklige Anstellung der Abtriebe für die hinteren Umlenkräder der Umlaufförderer entsteht unterhalb dieser Abtriebe ein Bauraum, in dem eine Wellenverbindung zur Fortführung der Hauptantriebswelle zwischen den benachbarten Reihengetrieben angeordnet werden kann. Die Reihengetriebe können also unter Zwischenschaltung einer jeweiligen Wellenverbindung am Rahmen zusammengesteckt werden. Bei Wartungs- und Reparaturarbeiten können die Reihengetriebe bei Bedarf einfach der Reihe nach vom Rahmen abgezogen werden,

Nach einer Ausgestaltung der Erfindung ist zwischen der Hauptantriebswelle und dem ersten Winkelgetriebe und/oder dem zweiten Winkelgetriebe eine Überlastkupplung im Reihengetriebe angeordnet. Als Überlastkupplungen können für sich bekannte Vorrichtungen verwendet werden, wie beispielsweise eine Nockenschaltkupplung, eine Kugelsitzkupplung, eine Scherbolzenkupplung oder dergleichen. Es ist vorteilhaft, wenn eine oder beide Überlastkupplungen noch in dem knappen Bauraum zwischen den 15 Zoll Reihenweite und innerhalb des gemeinsamen Getriebegehäuses geschützt und zentral untergebracht werden können.

Nach einer Ausgestaltung der Erfindung sind unterhalb der Pflückplatten zumindest zwei längs des Pflückspalts angeordnete Pflückrotoren angeordnet, deren Hüllkreise sich zumindest bereichsweise überlappen. In Kombination mit dem vorstehend beschriebenen Abfördersystem für die gepflückten Maiskolben ergibt sich durch den Einsatz von zumindest zwei Pflückrotoren unterhalb der Pflückplatten ein immer noch sehr schmal bauendes, aber trotzdem sehr leistungsfähiges Pflücksystem, das die Maisstängel sicher ergreift und nach unten abfördert, während die Maiskolben sicher nach hinten abgefördert werden.

Nach einer Ausgestaltung der Erfindung sind in Abständen entlang der Länge des Pflückspalts in die Hüllkreise der Pflückrotoren hineinreichende feststehende oder rotierende Messer angeordnet. Die feststehenden oder rotierenden Messer bewirken eine sehr leistungsfähige Zerkleinerung der Pflanzenreste, die durch den Pflückspalt nach unten gezogen werden. Trotz der schmalen Baubreite von Pflückeinheiten, die für Reihenabstände von nur 15 Zoll vorgesehen sind, können durch die Verwendung von feststehenden oder rotierenden Messern, die in die Hüllkreise der Pflückrotoren hineinreichen, bei der Ernte hohe Vorfahrtgeschwindigkeiten bei gleichbleibend guter Zerkleinerungsleistung gefahren werden.

Es wird ausdrücklich darauf hingewiesen, dass die vorstehend erläuterten Ausgestaltungen der Erfindung jeweils für sich, aber auch in einer beliebigen Kombination miteinander mit dem Gegenstand des Hauptanspruchs kombinierbar sind.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher beschrieben werden. Es zeigen:
- Fig. 1:: eine Querschnittsansicht entlang der Längsachse durch die Vorrichtung,
- Fig. 2:: eine Ansicht von vorne auf einen Teil der Vorrichtung,
- Fig. 3:: eine Schnittansicht quer durch zwei Pflückspalte,
- Fig. 4:: eine Ansicht von unten auf zwei Pflückeinheiten,
- Fig. 5:: eine Ansicht von hinten auf die hinteren Umlenkräder, und
- Fig. 6:: eine Darstellung eines Reihengetriebes für eine Pflückereinheit.

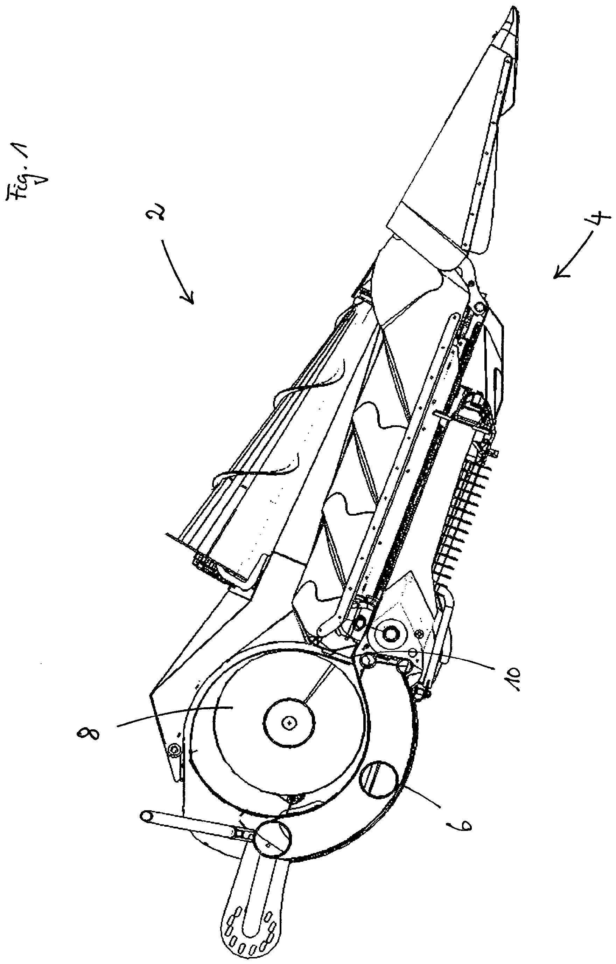

In Fig. 1 ist eine Vorrichtung 2 in einer Querschnittsansicht entlang der Längsachse durch die Vorrichtung 2 gezeigt. Die Pflückeinheiten 4 erstrecken sich längs der Längsachse. Die Pflückeinheiten 4 sind in der Vorrichtung 2 nebeneinander an dem Rahmen 6 befestigt. Im hinteren Bereich der Vorrichtung 2 befindet sich eine Querfördereinrichtung 8, die im Ausführungsbeispiel als eine Querförderschnecke ausgebildet ist. Im Übergangsbereich von den Pflückeinheiten 4 zu der Querfördereinrichtung 8 befindet sich eine Schwelle 10, über die gepflückten Maiskolben hinweg in den Wirkbereich der Querfördereinrichtung befördert werden.

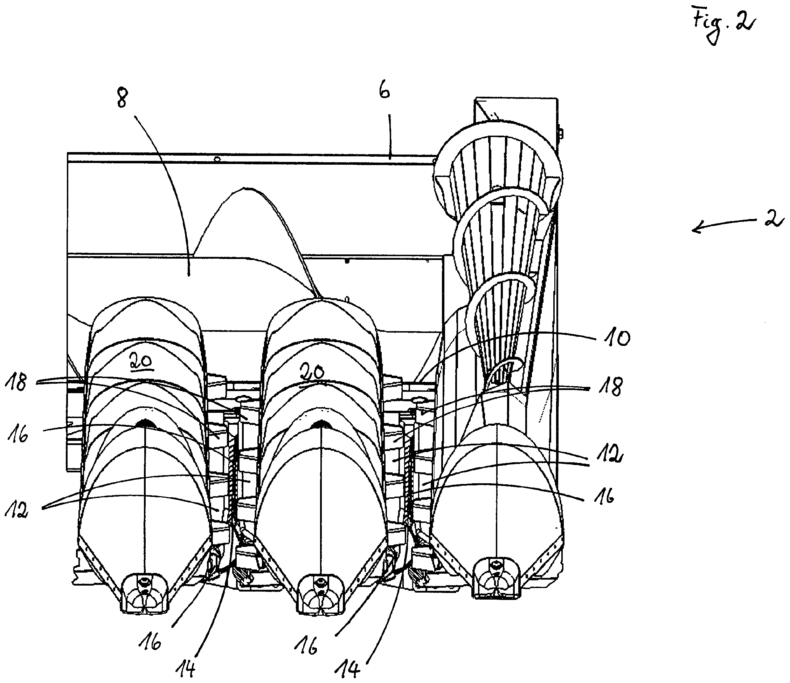

In Fig. 2 ist eine Ansicht der Vorrichtung 2 von vorne gezeigt. Die Fig. 2 zeigt das in Fahrtrichtung gesehen linke Ende eines Maispflückers. In Fig. 2 sind zwei Pflückspalte 14 gezeigt, die jeweils von zwei seitlich angrenzenden Pflückplatten 12 begrenzt sind. Unterhalb der Pflückplatten 12 befinden sich im Ausführungsbeispiel jeweils zwei Pflückrotoren 16, von denen in Fig. 2 allerdings immer nur ein Pflückrotor 16 gut sichtbar ist. Oberhalb der Pflückplatten 12 befinden sich eine Anzahl von Mitnehmern 18, die an einem in Fig. 2 nicht sichtbaren Umlaufförderer 22 befestigt sind. Die Umlaufförderer 22 sind in Fig. 2 durch eine jeweilige Abdeckhaube 20 verdeckt.

Anhand der Darstellung in Fig. 2 ist erkennbar, dass die von den Pflückplatten 12 zurückgehaltenen Maiskolben von den an den Pflückspalten 14 entlang laufenden Mitnehmern 18 nach hinten hin mitgenommen und über die Schwelle 10 hinweg in den Wirkbereich der Querfördereinrichtung 8 befördert werden. Die Stängel und Blätter der Maispflanzen werden von den Pflückrotoren 16 durch den Pflückspalt 14 hindurch nach unten gerissen und aus dem Pflückbereich auf diese Weise entfernt.

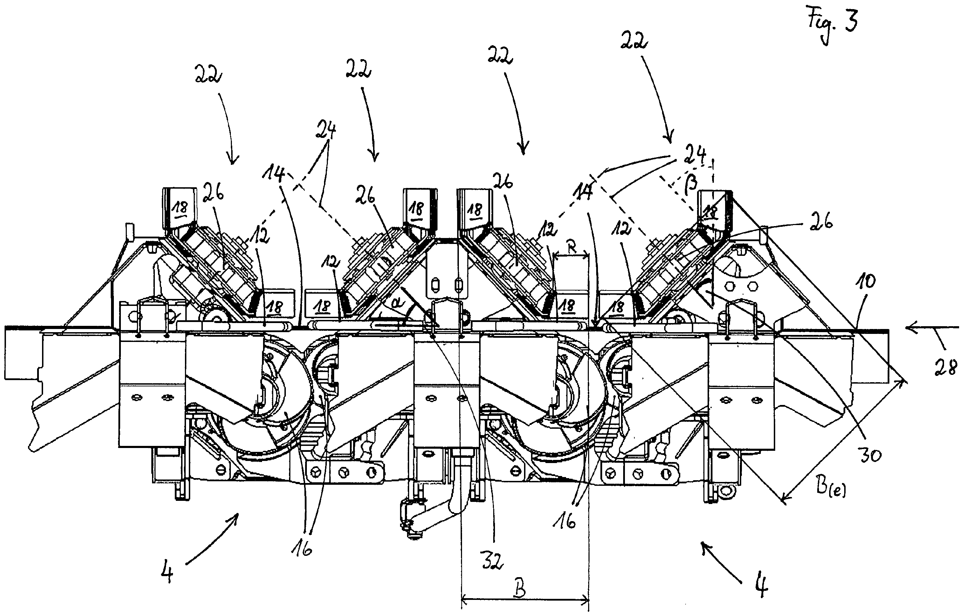

In Fig. 3 ist eine Schnittansicht quer durch zwei nebeneinander liegende Pflückspalte gezeigt. In Fig. 3 sind nun die vier Umlaufförderer 22 erkennbar, von denen jeweils 2 einem Pflückspalt 14 zugeordnet sind. In der Schnittansicht in Fig. 3 ist gut erkennbar, dass sich die beiden Pflückrotoren 16 unterhalb der Pflückplatten 12 befinden. Die Umlaufförderer 22 weisen an ihrem vorderen und hinteren Ende jeweils ein Umlenkrad 26 auf, um die die Ketten oder Riemen der Umlaufförderer 22 endlos umlaufen. An den Ketten oder Riemen der Umlaufförderer 22 sind die Mitnehmer 18 starr befestigt. Von ihrer Drehrichtung her sind die Umlaufförderer 22 so angetrieben, dass die Mitnehmer 18 den Pflückplatten 12 und dem Pflückspalt 14 entlang nach hinten laufen, dort vom jeweiligen hinteren Umlenkrad 26 umgelenkt werden und nach oben gestreckt wieder bis zum vorderen Umlenkrad 26 nach vorne laufen, um dort wieder umgelenkt zu werden, dabei neues Erntegut mitzunehmen und erneut über die Pflückplatten 12 nach hinten zu laufen. Auf diese Weise laufen die Mitnehmer 18 endlos um.

Die Drehachsen 24 der Umlenkräder 26 sind im Ausführungsbeispiel um den Winkel 32 zur Pflückebene 28 angestellt. Im Ausführungsbeispiel beträgt der Winkel 32 45°. Auch die Mitnehmer 18 sind gegenüber der Rotationsebene der Umlenkräder 26 und der Drehachse 24 der Umlenkräder 26 angestellt, und zwar um den Winkel 30. In dem in Fig. 3 gezeigten Ausführungsbeispiel beträgt der Winkel 30 ebenfalls 45°.

In der Schnittansicht in Fig. 3 ist erkennbar, dass die über die Pflückplatten 12 nach hinten laufenden Mitnehmer 18 dicht über die Pflückebene 28 laufen, während die wieder nach vorne laufenden Mitnehmer 18 mit einem seitlichen Versatz und mit einem gewissen Höhenabstand zu den Pflückspalten 14 nach vorne laufen. Durch die Winkelstellung der Drehachsen 24 der Umlenkräder 26 nehmen die Umlaufförderer über die Breite der Vorrichtung 2 gesehen nur eine vergleichsweise geringe Baubreite B ein, obwohl deren effektive Baubreite B(e) erheblich größer ist. Durch diese Konstruktion können die Mitnehmer 18 eine Reichweite R behalten, die den Maiskolben im Bereich der Pflückplattenebene 28 genügend Raum lässt, sauber vom Stängel abgetrennt zu werden, die es aber auch ermöglicht, danach die Maiskolben auch effektiv mit den Mitnehmern 18 abzufördern.

In dem in Fig. 3 gezeigten Ausführungsbeispiel sind die Mitnehmer 18 zwar starr mit der Kette oder dem Riemen der Umlaufförderer 22 verbunden, in einer alternativen Ausgestaltung können die Mitnehmer 18 allerdings auch über ein Schwenkgelenk mit der zugehörigen Kette oder dem zugehörigen Riemen verbunden sein, so dass sich die Mitnehmer 18 schwerkraftbedingt und/oder kulissengeführt in eine jeweils der Funktion günstigen Position relativ zur Kette oder dem Riemen und den Pflückplatten 12 mit dem Pflückspalt 14 befinden. Die als verlängert gedachten Drehachsen 24 sind in gestrichelten Linien gezeigt, soweit sie tatsächlich nicht realisiert sind.

In dem gezeigten Ausführungsbeispiel befinden sich die vorderen und hinteren Umlenkräder 26 für jeden Umlaufförderer 22 jeweils in derselben Ebene. Es ist allerdings auch vorstellbar, dass die Drehachsen der vorderen und hinteren Umlenkräder 26 eines Umlaufförderers 22 in ihrer Winkellage zueinander unterschiedlich angestellt sind. Wenn das hintere Umlenkrad 26 flacher angestellt wird, kann auch die Abdeckhaube 20 im hinteren Bereich beispielsweise flacher ausgestaltet werden, allerdings verengt sich dann der Förderkanal, der durch die Seitenwände der Abdeckhauben 20 und die dann nach hinten hin zueinander konvergierenden Umlaufförderer 22 begrenzt ist. Wenn das hintere Umlenkrad steiler angestellt wird, wird der Förderkanal in diesem Bereich breiter, allerdings ragt auch die Abdeckhaube 20 höher auf.

Aus der Schnittansicht in Fig. 3 ist erkennbar, dass sich aus der Winkelstellung der Drehachsen 24 von 45° zur Pflückebene 28 im Ausführungsbeispiel und die Kröpfung der Mitnehmer 18 im Ausführungsbeispiel um 45° zu den Drehachsen 24 ein guter Kompromiss zwischen einer möglichst raumsparenden Bauweise bei einem noch ausreichend breiten Förderkanal oberhalb der Pflückspalte 14 ergibt. Die Winkel α und β sind in Fig. 3 ebenfalls eingezeichnet. Die im Vorlauf nach oben gerichteten Mitnehmer 18 nehmen in dieser aufgerichteten Stellung eine Baubreite ein, die geringer ist als ihre förderwirksame Breite im Bereich der Pflückebene 28.

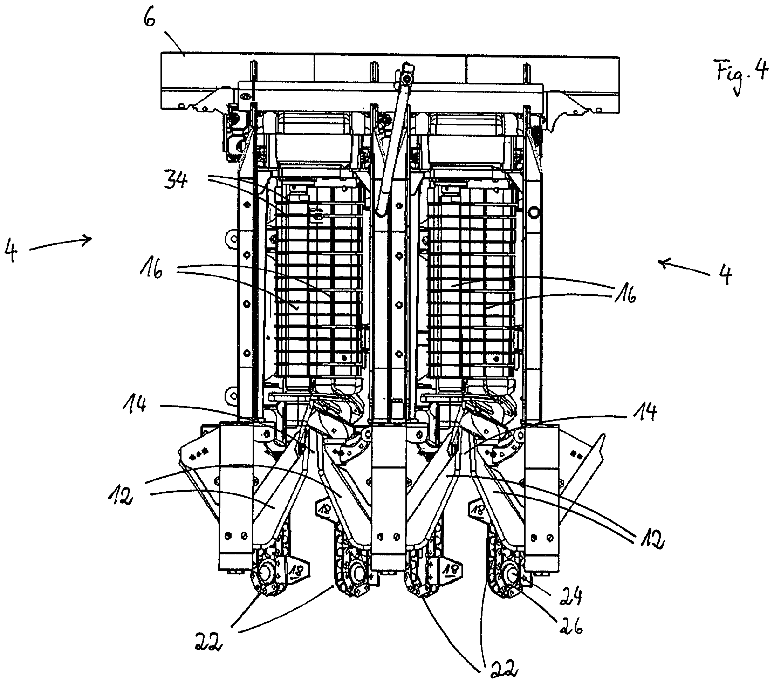

In Fig. 4 ist eine Ansicht auf zwei Pflückeinheiten 4 von unten gezeigt. Im vorderen Bereich der Pflückeinheiten 4 sind die Umlaufförderer 22 erkennbar, deren Mitnehmer 18 jeweils auf den Pflückspalt 14 zulaufen. Der etwa V-förmig geöffnete Einlaufbereich vor dem Pflückspalt 14 wird auch von den einander zugewandten Kanten der Pflückplatten 12 begrenzt. Die Pflückrotoren 16 sind mit ihrer Längsachse parallel zum Verlauf des Pflückspalts 14 ausgerichtet. Die beiden Pflückrotoren 16 kämmen mit ihren beiden Hüllkreisen ineinander. Die Pflückrotoren 16 weisen jeweils einen zylindrischen Körper auf, der den Kern eines Pflückrotors 16 bildet. Zusätzlich können Reißplatten vorhanden sein, die in radialer Richtung über den zylindrischen Körper hervorstehen. Auf zumindest einem Pflückrotor 16 können Schneidscheiben 34 angeordnet sein, die in radialer Richtung über den zylindrischen Körper dieses Pflückrotors 16 überstehen und bis an oder in den Hüllkreis des benachbarten Pflückrotors 16 heranreichen. In dem benachbarten Pflückrotor 16 können Nuten ausgebildet sein, in die die Schneidscheiben 34 hineinreichen.

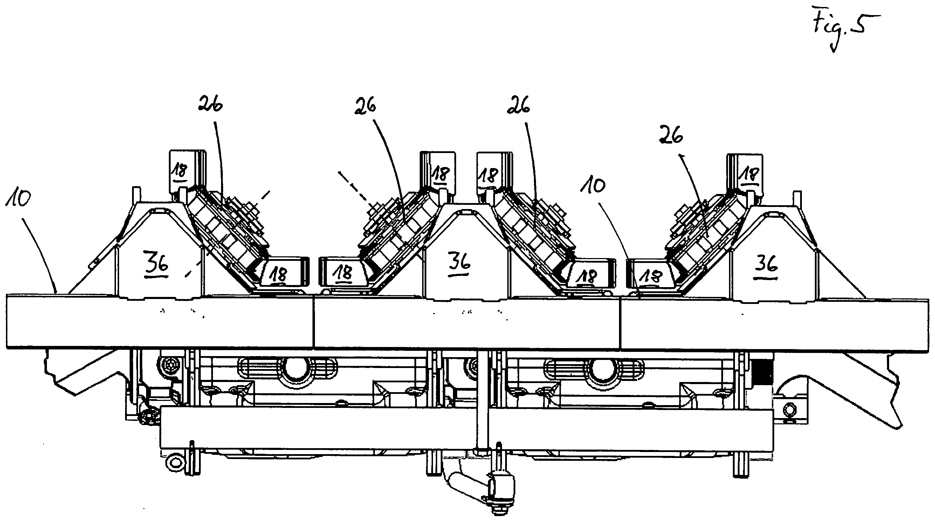

In Fig. 5 ist eine Ansicht von hinten auf die hinteren Umlenkräder 26 gezeigt. Über die Schwelle 10 ragen drei Abdeckplatten 36 auf, die die Antriebswellen von jeweils benachbarten und nebeneinander angeordneten hinteren Umlenkrädern 26 zur Querfördereinrichtung hin gegen eindringendes Erntegut abdecken. Erntegut, das von der Querfördereinrichtung 8 in Querrichtung hinter den hinteren Umlenkrädern 26 vorbeigefördert wird, wird ebenfalls von den Abdeckplatten 36 daran gehindert, in den Bereich der Antriebswellen zu gelangen. Die Abdeckplatten 36 haben eine etwa dreieckige Form und ragen von der Schwelle 10 bis in den Bereich der Rotationsebene der benachbarten hinteren Umlenkräder 26 auf.

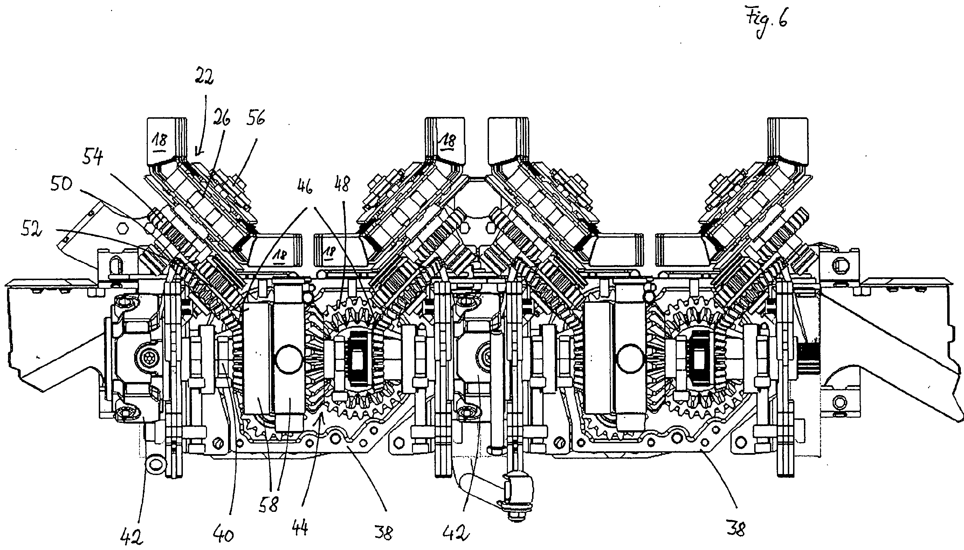

In Fig. 6 ist eine Ansicht von hinten auf einen Zusammenbau von zwei Reihengetrieben 38 mit geöffneten Getriebedeckeln gezeigt. Quer durch jedes Reihengetriebe 38 erstreckt sich die Hauptantriebswelle 40. Die quer durch die Reihengetriebe 38 verlaufenden Wellenabschnitte der Hauptantriebswelle 40 sind durch Wellenverbindungen 42 miteinander verbunden, die den Zwischenraum zwischen benachbarten Reihengetrieben 38 überbrücken. Im Reihengetriebe 38 ist ein erstes Winkelgetriebe 44 und ein zweites Winkelgetriebe 46 gezeigt. Das erste Winkelgetriebe 44 dient dem Antrieb des Pflückrotorenantriebs 48, der über eine weitere Stirnradstufe auch auf den zweiten Pflückrotor übertragen wird. Die beiden zweiten Winkelgetriebe 46 dienen jeweils dem Antrieb eines Umlaufförderers 22. Die ersten und zweiten Winkelgetriebe 44, 46 sind jeweils als Kegelradgetriebe ausgestaltet.

Die zweiten Winkelgetriebe 46 sind so ausgestaltet, dass sie die Antriebskraft über eine erste Zahnradstufe 50 auf die Zwischenwelle 52 übertragen. Von dort aus wird die Antriebskraft über eine zweite Zahnradstufe 54 auf die Welle 56 übertragen, auf der das hintere Umlenkrad 26 eines Umlaufförderers 22 drehfest angeordnet ist. Das hintere Umlenkrad 26 treibt als Zahnrad die Kette oder als Riemenscheiben den Riemen des Umlaufförderers 22 mit den Mitnehmern 18 an.

Zwischen der Hauptantriebswelle 40 und dem ersten Winkelgetriebe 44 und/oder dem zweiten Winkelgetriebe 46 ist jeweils eine Überlastkupplung 58 im Reihengetriebe 38 angeordnet. Durch die Überlastkupplungen 58 kann im Überlastungsfall jeweils der Antrieb zu den Pflückrotoren und/oder zu den Umlaufförderern unterbrochen werden.

Das vorstehend beschriebene Ausführungsbeispiel dient nur der Erläuterung der Erfindung. Die Erfindung ist nicht auf das gezeigte Ausführungsbeispiel beschränkt. Dem Fachmann bereitet es keine Schwierigkeiten, das Ausführungsbeispiel auf eine ihm als geeignet erscheinende Art gemäß der anhängigen Ansprüche abzuwandeln, um es an einen konkreten Anwendungsfall anzupassen.

## Patentansprüche

1. Vorrichtung (2) zur Ernte von stängeligem Halmgut mit
- einer Anzahl von nebeneinander am Rahmen (6) der Vorrichtung (2) angeordneten Pflückeinheiten (4), die jeweils einen Pflückspalt (14) seitlich begrenzende Pflückplatten (12) und darunter befindliche Pflückrotoren (16) aufweisen,
- den jeweiligen Pflückeinheiten (4) zugeordneten Fördereinheiten, die als umlaufend angetriebene Umlaufförderer (22), die auf gegenüberliegenden Seiten oberhalb eines Pflückspaltes (14) angeordnet und mit an den Umlaufelementen befestigten Mitnehmern (18) ausgebildet sind,
- einer stromabwärts der Fördereinheiten angeordneten Querfördereinrichtung (8), wobei die Drehachsen (24) von vorderen Umlenkrädern (26) der Umlaufförderer (22) quer zur Pflückebene (28), die von den einander zugewandten Vorderkanten der einem Pflückspalt (14) zugeordneten Pflückplatten (12) definiert ist, so in einem Winkel (32) schräg angestellt sind, dass sich die als verlängert gedachten Drehachsen (24) oberhalb der Pflückplatten (12) in einem Abstand zur Pflückebene (28) kreuzen, **gekennzeichnet dadurch, dass** die an den Umlaufförderern (22) ausgebildeten Mitnehmer (18) ihrerseits zur Drehachse (24) der Umlenkräder (26) nach oben hin um einen Winkel (30) angestellt sind, wobei die Mitnehmer (18) im Umlenkbereich des hinteren Umlenkrades (26) eine Schwelle (10) überstreichen, die am hinteren Ende des Pflückspaltes (14) den Übergang von den Pflückplatten (12) zur Mulde der Querfördereinrichtung (8) bildet.

2. Vorrichtung (2) nach Anspruch 1, **dadurch gekennzeichnet, dass** die Drehachsen (24) der Umlenkräder (26) der Umlaufförderer (22) quer zur Pflückebene (28), die von den einander zugewandten Vorderkanten der einem Pflückspalt (14) zugeordneten Pflückplatten (12) definiert ist, in einem Winkel α (32) zur Pflückebene und die an den Umlaufförderern (22) angeordneten Mitnehmer (18) in einem Winkel β (30) zur Umlaufebene, die von den Umlenkrädern (26) definiert ist, schräg angestellt sind, wobei der Winkel β (30) so gewählt ist, dass die Mitnehmer (18) in einer Hüllkurvenbahn umlaufen, in der sie in ihrer Abförderrichtung mit ihrer Unterkante planparallel zur Pflückebene (28) ausgerichtet sind.

3. Vorrichtung (2) nach Anspruch 2, **dadurch gekennzeichnet, dass** die Winkel α (32) und β (30) jeweils etwa oder genau 45° betragen.

4. Vorrichtung (2) nach einem der vorhergehenden Ansprüche, **dadurch gekennzeichnet, dass** im vorderen Bereich der Umlaufförderer (22) mehrere Umlenkräder (26) seitlich und in Längsrichtung der Vorrichtung (2) versetzt zueinander angeordnet sind, wobei bei jedem Umlaufförderer (22) das vorderste Umlenkrad (26) seitlich weiter von der Längsmittelachse des Einzugsspaltes entfernt ist als das weiter hinten liegende Umlenkrad (26), und die mehreren Umlenkräder (26) der einem Pflückspalt (14) zugeordneten Umlaufförderer (22) eine V-förmige Annahmeöffnung begrenzen, in der die gegenüberliegenden Umlaufförderer (22) abschnittweise einen linearen Verlauf aufweisen.

5. Vorrichtung (2) nach einem der vorhergehenden Ansprüche, **dadurch gekennzeichnet, dass** auch die Drehachsen (24) der hinteren Umlenkräder (26) der Umlaufförderer (22) quer zur Pflückebene (28) so in einem Winkel (32) schräg angestellt sind, dass sich die als verlängert gedachten Drehachsen (24) oberhalb in einem Abstand zur Pflückebene (28) kreuzen.

6. Vorrichtung (2) nach Anspruch 5, **dadurch gekennzeichnet, dass** die Drehachsen (24) der hinteren Umlenkräder (26) der Umlaufförderer (22) in einem Winkel von genau oder etwa 45° zur Pflückebene (28) schräg angestellt sind.

7. Vorrichtung (2) nach einem der vorhergehenden Ansprüche, **dadurch gekennzeichnet, dass** zumindest ein Pflückrotor (16) über seine Länge verteilt mehrere von der Welle des Pflückrotors (16) getragene Schneidscheiben (34) aufweist, die in radialer Richtung über den zylindrischen Körper dieses Pflückrotors (16) überstehen und bis an oder in den Hüllkreis des benachbarten Pflückrotors (16) heranreichen.

8. Vorrichtung (2) nach einem der vorhergehenden Ansprüche, **dadurch gekennzeichnet, dass** Antriebswellen von nebeneinander angeordneten hinteren Umlenkrädern (26) zur Querfördereinrichtung (8) hin von einer Abdeckplatte (36) abgedeckt sind, die von der Schwelle (10) bis zur Rotationsebene der benachbarten hinteren Umlenkräder (26) aufragt.

9. Vorrichtung (2) nach einem der vorhergehenden Ansprüche, **dadurch gekennzeichnet, dass** die einem Pflückspalt (14) zugeordneten Umlaufförderer (22) und Pflückrotoren (16) von einem gemeinsamen Reihengetriebe (38) angetrieben werden, wobei das Reihengetriebe (38) für den Antrieb jedes Umlaufförderers (22) eine erste Zahnradstufe (50) von einer Hauptantriebswelle (40) auf eine Zwischenwelle (52) und eine zweite Zahnradstufe (54) von der Zwischenwelle (52) auf die Welle (56) aufweist, auf der das hintere Umlenkrad (26) des Umlaufförderers (22) drehfest aufgesetzt ist, und wobei die ersten Zahnradstufe (50) als Winkelgetriebe ausgebildet ist, so dass die Zwischenwelle (52) nicht parallel zur Hauptantriebswelle (40) verläuft.

10. Vorrichtung (2) nach Anspruch 9, **dadurch gekennzeichnet, dass** zwischen benachbarten Reihengetrieben (38) eine Wellenverbindung (42) zur Fortführung der Hauptantriebswelle (40) angeordnet ist.

11. Vorrichtung (2) nach Anspruch 9 oder 10, **dadurch gekennzeichnet, dass** zwischen der Hauptantriebswelle (40) und dem ersten Winkelgetriebe (44) und/oder dem zweiten Winkelgetriebe (46) eine Überlastkupplung (58) im Reihengetriebe (38) angeordnet ist.

12. Vorrichtung (2) nach einem der vorhergehenden Ansprüche, **dadurch gekennzeichnet, dass** unterhalb der Pflückplatten (12) zumindest zwei längs des Pflückspalts (14) angeordnete Pflückrotoren (16) angeordnet sind, deren Hüllkreise sich zumindest bereichsweise überlappen.

13. Vorrichtung (2) nach Anspruch 12, **dadurch gekennzeichnet, dass** in Abständen entlang der Länge des Pflückspalts (14) in die Hüllkreise der Pflückrotoren (16) hineinreichende feststehende oder rotierende Messer angeordnet sind.

## Claims

1. Device (2) for harvesting stalk-like stem crops, having
- a number of picking units (4) arranged side by side on the frame (6) of the device (2), each of which has picking plates (12) that laterally delimit a picking gap (14) and picking rotors (16) located beneath said picking plates,
- conveying units, assigned to the respective picking units (4), designed as continuous conveyors (22) driven in circulation, which are arranged on opposite sides above a picking gap (14), and with carrier elements (18) attached to the circulating elements,
- a transverse conveying device (8) arranged downstream of the conveying units, wherein the axes of rotation (24) of front deflecting wheels (26) of the continuous conveyors (22) are positioned obliquely at an angle (32) transversely to the picking plane (28), which is defined by the mutually facing front edges of the picking plates (12) assigned to a picking gap (14), such that the imaginary extensions of the axes of rotation (24) intersect above the picking plates (12) at a distance from the picking plane (28), **characterised in that** the carrier elements (18) formed on the continuous conveyors (22) are for their part positioned pointing upward at an angle (30) to the axis of rotation (24) of the deflecting wheels (26), wherein the carrier elements (18) pass over a threshold (10) in the deflection region of the rear deflection wheel (26), which forms the transition from the picking plates (12) to the trough of the transverse conveying device (8) at the rear end of the picking gap (14).

2. Device (2) according to claim 1, **characterised in that** the axes of rotation (24) of the deflecting wheels (26) of the continuous conveyors (22) are positioned obliquely at an angle α (32) to the picking plane, transversely to the picking plane (28), which is defined by the mutually facing front edges of the picking plates (12) assigned to a picking gap (14), and the carrier elements (18) arranged on the continuous conveyors (22) are positioned obliquely at an angle β (30) to the circulating plane, which is defined by the deflecting wheels (26), wherein the angle β (30) is selected such that the carrier elements (18) circulate along a boundary curve in which, in their removal direction, they are aligned with their lower edge in a plane parallel to the picking plane (28).

3. Device (2) according to claim 2, **characterised in that** the angles α (32) and β (30) are each roughly or precisely 45°.

4. Device (2) according to any one of the preceding claims, **characterised in that** in the front region of the continuous conveyors (22), a plurality of deflecting wheels (26) are arranged offset from one another laterally and in the longitudinal direction of the device (2), wherein, for each continuous conveyor (22), the foremost deflecting wheel (26) is located a greater lateral distance from the longitudinal centre axis of the intake gap than the deflecting wheel (26) located further toward the rear, and the plurality of deflecting wheels (26) of the continuous conveyors (22) assigned to a picking gap (14) delimit a V-shaped receiving opening, in which the mutually opposing continuous conveyors (22) have a linear profile in sections.

5. Device (2) according to any one of the preceding claims, **characterised in that** the axes of rotation (24) of the rear deflecting wheels (26) of the continuous conveyors (22) are positioned obliquely at an angle (32) transversely to the picking plane (28), such that the imaginary extensions of the axes of rotation (24) intersect above at a distance from the picking plane (28).

6. Device (2) according to claim 5, **characterised in that** the axes of rotation (24) of the rear deflecting wheels (26) of the continuous conveyors (22) are positioned obliquely at an angle of precisely or approximately 45° to the picking plane (28).

7. Device (2) according to any one of the preceding claims, **characterised in that** at least one picking rotor (16) has a plurality of cutting discs (34), distributed over its length and supported by the shaft of the picking rotor (16), said cutting discs projecting radially beyond the cylindrical body of said picking rotor (16) and extending up to or into the boundary circle of the adjacent picking rotor (16).

8. Device (2) according to any one of the preceding claims, **characterised in that** drive shafts of rear deflecting wheels (26) that are arranged side by side are covered up to the transverse conveying device (8) by a cover plate (36), which projects upward from the threshold (10) to the plane of rotation of the adjacent rear deflecting wheels (26).

9. Device (2) according to any one of the preceding claims, **characterised in that** the continuous conveyors (22) and picking rotors (16) assigned to a picking gap (14) are driven by a common series gearbox (38), wherein the series gearbox (38) for driving each continuous conveyor (22) has a first gear stage (50) from a main drive shaft (40) to an intermediate shaft (52), and a second gear stage (54) from the intermediate shaft (52) to the shaft (56), on which the rear deflecting wheel (26) of the continuous conveyor (22) is mounted so as to be rotationally fixed, and wherein the first gear stage (50) is designed as an angular gear, so that the intermediate shaft (52) does not run parallel to the main drive shaft (40).

10. Device (2) according to claim 9, **characterised in that** a shaft connection (42) for continuing the main drive shaft (40) is arranged between adjacent series gearboxes (38).

11. Device (2) according to claim 9 or 10, **characterised in that** an overload clutch (58) is arranged in the series gearbox (38) between the main drive shaft (40) and the first angular gear (44) and/or the second angular gear (46) .

12. Device (2) according to any one of the preceding claims, **characterised in that** at least two picking rotors (16) arranged along the picking gap (14) are arranged below the picking plates (12), the boundary circles of said picking rotors overlapping at least in regions.

13. Device (2) according to claim 12, **characterised in that** stationary or rotating blades are arranged spaced along the length of the picking gap (14) and extending into the boundary circles of the picking rotors (16).

## Revendications

1. Dispositif (2) pour la récolte de produits de cultures à tiges, comprenant
- une pluralité d'unités de cueillette (4) disposées les unes à côté des autres sur le cadre (6) du dispositif (2) et qui présentent respectivement des plaques de cueillette (12) délimitant latéralement une fente de cueillette (14) ainsi que des rotors de cueillette (16) situés en-dessous,
- des unités de transport associées aux unités de cueillette (4) respectives qui sont réalisées sous la forme de transporteurs rotatifs (22) entraînés en rotation, lesquels sont disposés sur des côtés opposés au-dessus d'une fente de cueillette (14) et sont réalisés avec des éléments d'entraînement (18) fixés aux éléments rotatifs, et
- un moyen de transport transversal (8) disposé en aval des unités de transport, dans lequel les axes de rotation (24) de poulies de renvoi avant (26) des transporteurs rotatifs (22) sont réglés de manière inclinée transversalement au plan de cueillette (28), qui est défini par les arêtes avant orientées l'une vers l'autre des plaques de cueillette (12) associées à une fente de cueillette (14), selon un angle (32) de telle sorte que les axes de rotation (24), si on les prolonge de manière imaginaire, se croisent au-dessus des plaques de cueillette (12) à distance du plan de cueillette (28), **caractérisé en ce que** les éléments d'entraînement (18) réalisés sur les transporteurs rotatifs (22) sont réglés l'axe de rotation (24) des poulies de leur côté selon un angle (30) vers le haut par rapport de renvoi (26), dans lequel les éléments d'entraînement (18) dans la zone de renvoi de la poulie de renvoi arrière (26) s'étendent sur un seuil (10) qui forme, à l'extrémité arrière de la fente de cueillette (14), le passage des plaques de cueillette (12) vers la benne du moyen de transport transversal (8).

2. Dispositif (2) selon la revendication 1, **caractérisé en ce que** les axes de rotation (24) des poulies de renvoi (26) des transporteurs rotatifs (22) sont réglés de manière inclinée transversalement au plan de cueillette (28), qui est défini par les arêtes avant orientées l'une vers l'autre des plaques de cueillette (12) associées à une fente de cueillette (14), selon un angle α (32) par rapport au plan de cueillette et les éléments d'entraînement (18) disposés sur les transporteurs rotatifs (22) sont réglés selon un angle β (30) par rapport au plan rotatif, qui est défini par les poulies de renvoi (26), dans lequel l'angle β (30) est choisi de telle sorte que les éléments d'entraînement (18) tournent dans une rainure d'enveloppe, dans laquelle ils sont orientés dans leur direction de déchargement avec leur arête inférieure parallèle au plan de cueillette (28).

3. Dispositif (2) selon la revendication 2, **caractérisé en ce que** les angles α (32) et β (30) sont chacun précisément ou approximativement de 45°.

4. Dispositif (2) selon une des revendications précédentes, **caractérisé en ce que**, dans la zone avant des transporteurs rotatifs (22) plusieurs poulies de renvoi (26) sont disposées latéralement et décalées les unes par rapport aux autres dans la direction longitudinale du dispositif (2), dans lequel pour chaque transporteur rotatif (22) la poulie de renvoi la plus avant (26) est plus éloignée de l'axe médian longitudinal de la fente d'entrée que la poulie de renvoi située plus en arrière (26), et les plusieurs poulies de renvoi (26) des transporteurs rotatifs (22) associés à une fente de cueillette (14) délimitent une ouverture de réception en forme de V, dans laquelle les transporteurs rotatifs (22) opposés présentent sur certaines sections un tracé linéaire.

5. Dispositif (2) selon une des revendications précédentes, **caractérisé en ce que** les axes de rotation (24) des poulies de renvoi arrière (26) des transporteurs rotatifs (22) sont également réglés de manière inclinée transversalement au plan de cueillette (28) selon un angle (32) de telle sorte que les axes de rotation (24), si on les prolonge de manière imaginaire, se croisent au-dessus à distance du plan de cueillette (28).

6. Dispositif (2) selon la revendication 5, **caractérisé en ce que** les axes de rotation (24) des poulies de renvoi arrière (26) des transporteurs rotatifs (22) sont réglés de manière inclinée selon un angle précisément ou approximativement de 45° par rapport au plan de cueillette (28).

7. Dispositif (2) selon une des revendications précédentes, **caractérisé en ce qu'**au moins un rotor de cueillette (16) présente de manière répartie sur sa longueur plusieurs disques de coupe (34) portés par l'arbre du rotor de cueillette (16) et qui dépassent du corps cylindrique de ce rotor de cueillette (16) dans la direction radiale et arrivent jusque sur ou dans l'enveloppe du rotor de cueillette (16) adjacent.

8. Dispositif (2) selon une des revendications précédentes, **caractérisé en ce que** des arbres d'entraînement de poulies de renvoi arrière (26) disposées les unes à côté des autres sont couverts vers le moyen de transport transversal (8) par une plaque de protection (36) qui dépasse du seuil (10) jusqu'au plan de rotation des poulies de renvoi arrière adjacentes (26).

9. Dispositif (2) selon une des revendications précédentes, **caractérisé en ce que** les transporteurs rotatifs (22) associés à une fente de cueillette (14) et les rotors de cueillette (16) sont entraînés par un engrenage en série (38) commun, dans lequel l'engrenage en série (38) présente pour l'entraînement de chaque transporteur rotatif (22) un premier degré de roue d'engrenage (50) d'un arbre d'entraînement principal (40) sur un arbre intermédiaire (52) et un second degré de roue d'engrenage (54) de l'arbre intermédiaire (52) sur l'arbre (56) sur lequel la poulie de renvoi arrière (26) du transporteur rotatif (22) est appliquée de manière fixe en rotation, et dans lequel le premier degré de roue d'engrenage (50) est réalisé sous la forme d'un engrenage angulaire de telle sorte que l'arbre intermédiaire (52) ne s'étend pas parallèlement à l'arbre d'entraînement principal.

10. Dispositif (2) selon la revendication 9, **caractérisé en ce que**, entre des engrenages en série (38) adjacents, une liaison d'arbre (42) est disposée pour enchaîner avec l'arbre d'entraînement principal (40).

11. Dispositif (2) selon la revendication 9 ou 10, **caractérisé en ce que**, entre l'arbre d'entraînement principal (40) et le premier engrenage angulaire (44) et/ou le second engrenage angulaire (46), un couplage contre les surcharges (58) est disposé dans l'engrenage en série (38).

12. Dispositif (2) selon une des revendications précédentes, **caractérisé en ce que**, en-dessous des plaques de cueillette (12), sont disposés au moins deux rotors de cueillette (16) disposés le long de la fente de cueillette (14) et dont les enveloppes se chevauchent au moins par endroits.

13. Dispositif (2) selon la revendication 12, **caractérisé en ce que**, à certaines distances le long des longueurs de la fente de cueillette (14) dans les enveloppes des rotors de cueillette (16), sont disposés des couteaux fixes ou rotatifs s'étendant vers l'intérieur.
